# EUROPEAN PATENT SPECIFICATION

(11) **EP 3 167 518 B1**
(45) Date of publication and mention of the grant of the patent: **23.05.2018**
(21) Application number: 15738279.7
(22) Date of filing: 22.06.2015
(51) Int. Cl.: H02B 11/127, H02B 11/167

(54) **INSERTION-EXTRACTION-MECHANISM**
EINFÜHRUNGS- UND EXTRAKTIONSMECHANISMUS
MÉCANISME D'INSERTION-EXTRACTION

(30) Priority: 11.07.2014 EP 14176669
(43) Date of publication of application: 17.05.2017
(73) Proprietor: ABB Schweiz AG, 5400 Baden (CH)
(72) Inventor: INVERNIZZI, Pierluigi, I-24030 Corna Imagna (Bergamo) (IT); RAMBALDINI, Simone, I-20037 Paderno Dugnano (MI) (IT)
(74) Representative: Candito, Rocco
(86) International application number: PCT/EP2015/063970
(87) International publication number: WO 2016/005175

(56) References cited:
- WO-A1-2013/168300
- JP-A- H0 819 124
- JP-A- H09 308 029
- JP-U- S5 727 711

## Description

The present invention relates to an insertion-extraction-mechanism for a switching-device, in particular for a circuit-breaker of the draw-out type which is removably received within a medium-voltage switchgear.

Medium-voltage switchgears are known which include a circuit-breaker supported by a trolley which is slidable within a compartment. The circuit-breaker is insertable/extractable in/from the compartment so as to engage/disengage movable contacts with stationary contacts provided within the switchgear.

The connection of the movable contacts to the respective stationary contacts is achieved according to different possible types of connection as described in the following. According to a first type of connection, bolts and nuts are used to mutually fasten the movable and stationary contacts. Although such a first type of connection proves to perform in a quite satisfying way as far as reliability and safety requirements are concerned owing to the rather simplified structural configuration, such a type of connection is undoubtedly rather wearisome and time-consuming to be established. In fact, the screwing operations take a long time and particular procedures are required for controlling the correct tightening torque of each nut-bolt pair and for controlling the correct alignment between movable and stationary contacts.

A second and third types of connection are also known which are based on so-called tulips-contacts and on so-called pliers-contacts respectively. A worm-screw-mechanism drivable by a crank-handle is associated with these types of connection for inserting the circuit-breaker in an operative connection position and for extracting it in a non-operative disconnection position. The tulips-contacts and the pliers-contact provide a connection/disconnection procedure which is faster and easier to perform compared with the use of nuts-bolts. However, there is the need to guarantee and adjust a perfect spatial relationship between the worm-screw-mechanism and the tulips-contacts or the pliers-contact in order to ensure a correct alignment, and thus a successful mutual engagement, of the movable contacts with the stationary contacts.

Therefore, with these types of connection, high levels of precision are required during both the assembling procedure and the service life of the switchgear.

It is also known a further type of switchgear in which the movable contacts of the circuit-breakers engage with the stationary contacts through quick-type-connections, such as plier-contact, and in which no moving-driving-mechanism such as the above-mentioned worm-screw-mechanism are present. In this type, the circuit-breaker, which is slidable along a suitable rails or guides provided on a support-plane inside the switchgear, must be manually pushed in, and pulled out of, the compartment in a manual manner by an operator.

Although such a type of circuit breaker has the advantages provided by a simplified structural configuration and by a quick-coupling-configuration, however a rather high physical effort is required to the operator in order to overcome the elastic-clamping-resistance which is opposed by the movable and stationary contact during reciprocal engagement/disengagement. Sometimes, such an elastic-clamping-resistance may be such as to require a contemporary intervention of two operators.

JPS5727711U, WO2013/168300A1, JPH0819124A disclose a circuit-breaker of the draw-out type which is removably received within a switchgear, wherein the circuit-breaker is inserted/extracted in/from the switchgear through a lever mechanism.

The insertion-extraction-mechanism according to the invention is defined in the appended claims.

Owing to the invention, an insertion-extraction-mechanism is provided which is structurally simple, safe, reliable and which requires minimal external force to be operated for achieving the insertion/extraction of a switching-device in/from a switchgear, thus drastically simplifying the task to an operator.

The present invention also encompasses an electric switchgear, equivalently called with the term panel or cabinet or switchboard, comprising an insertion-extraction-mechanism as defined in the related appended claims and described herein, and also including a switching-device, in particular a circuit-breaker.

Characteristics and advantages of the present invention will result from the description and from claims.

The present invention can be better understood and implemented with reference to the attached drawings that illustrate an embodiment thereof by way of a non-limiting example, in which:
Figure 1 is a perspective fragmentary view of a switchgear including a circuit-breaker and an insertion-extraction-mechanism according to the present invention;
Figure 2 is an enlarged detail of Figure 1, in which a driving-lever of the insertion-extraction-mechanism is arranged in an extraction-operative-configuration, and in which pushing-protrusions and a blocking-protrusion included in the insertion-extraction-mechanism are visible;
Figure 3 show the driving-lever of the insertion-extraction-mechanism in an insertion-operative-configuration;
Figure 4 is a fragmentary view showing part of the insertion-extraction-mechanism, where the circuit-breaker and other components of the switchgear have been removed for better clarity;
Figures 5 and 6 are a perspective view and an exploded view respectively of the insertion-extraction-mechanism without the driving-lever;
Figure 7 show the driving-lever of the insertion-extraction-mechanism;
Figures 8 and 9 are a side view and a front view respectively of the insertion-extraction-mechanism in which the driving lever is shown in a rest-configuration;
Figure 10 is a rear-view showing, from the bottom, the pushing-protrusions included in the insertion-extraction-mechanism;
Figure 11 is an enlarged detail of Figure 8;
Figure 12 is a top-view of the insertion-extraction-mechanism with the driving lever in the rest-configuration;
Figure 12A is a fragmentary top-view of the insertion-extraction-mechanism with the driving lever in the extraction-operative-configuration like in Figure 3;
Figure 13 shows in detail a portion of the driving-lever in the rest-configuration;
Figures 14, 15, 16, 17 are a perspective view, a rear view, a side view and a top view respectively of a front portion of the insertion-extraction-mechanism;
Figure 18 is a perspective view, from the internal side, of the front portion of Figure 14;
Figures 19 to 32 are different views showing the insertion-extraction-mechanism in different operative configurations, in particular:

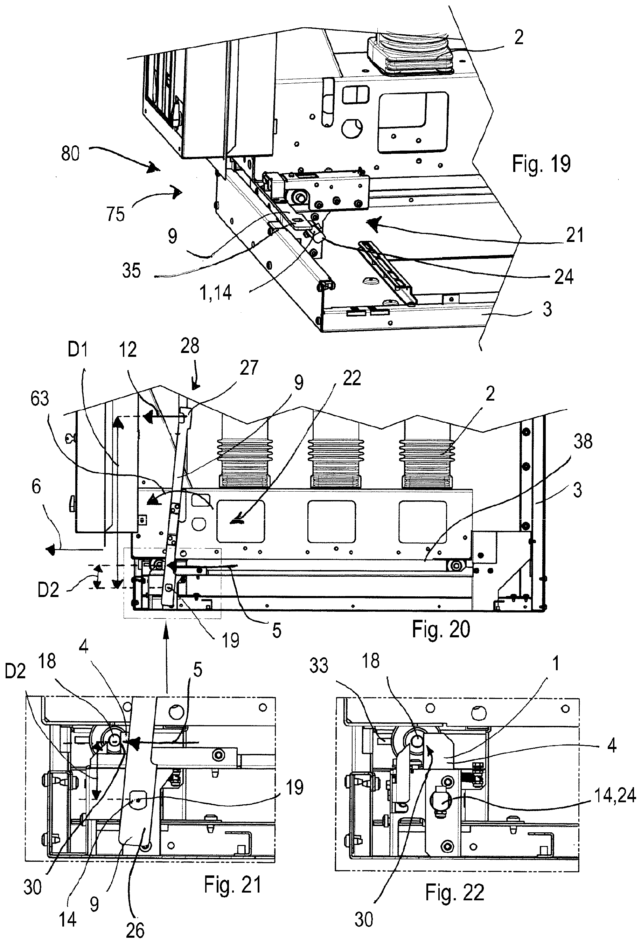

   In Figure 19 a part of the switchgear is shown in which the circuit-breaker is in an inserted-operative-position, and in which the driving-lever, arranged in the rest-configuration, acts as locking-unit for the circuit-breaker;
   Figures 20, 21 show the driving-lever in a first position of an extraction-operative-configuration in which the circuit-breaker is about to be extracted;
   Figure 22 is a view like Figure 21 but in which the driving-lever is not shown for enabling visibility of other hidden parts of the insertion-extraction-mechanism;

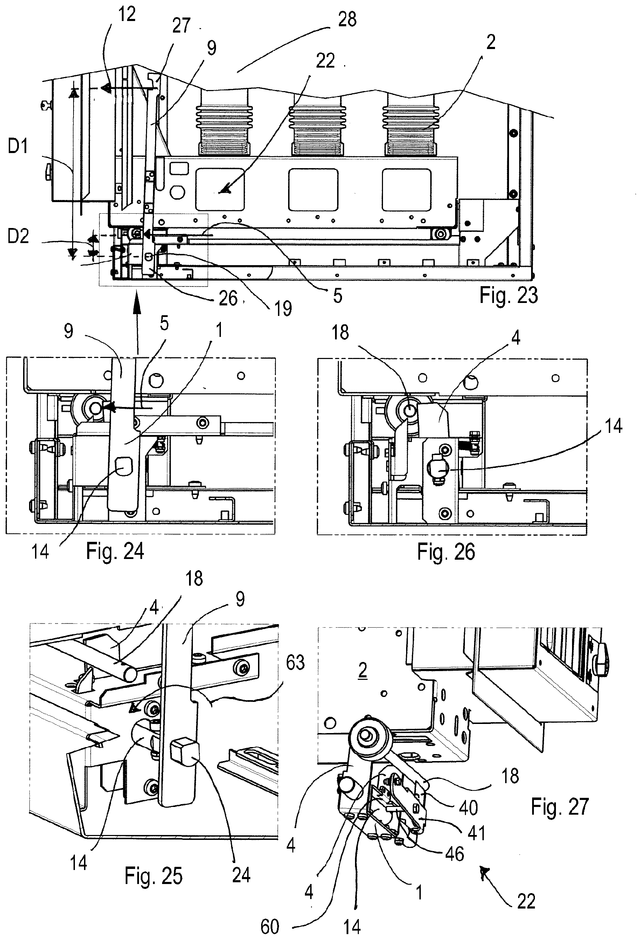

   Figures 23, 24, 25 show the insertion-extraction-mechanism with the driving-lever in a second position of the extraction-operative-configuration in which the circuit-breaker has been partially disengaged from the stationary contacts; in Figure 25 a front right wheel of the circuit-breaker-trolley has been removed for better showing a pushing-protrusion and the blocking-protrusion of the insertion-extraction-mechanism;
   Figure 26 is a view like Figure 24 but in which the driving-lever is not shown for better clarity;
   Figure 27 is another view showing the pushing-protrusions and the blocking-protrusion of the insertion-extraction-mechanism in the second position shown in Figures 23-25;

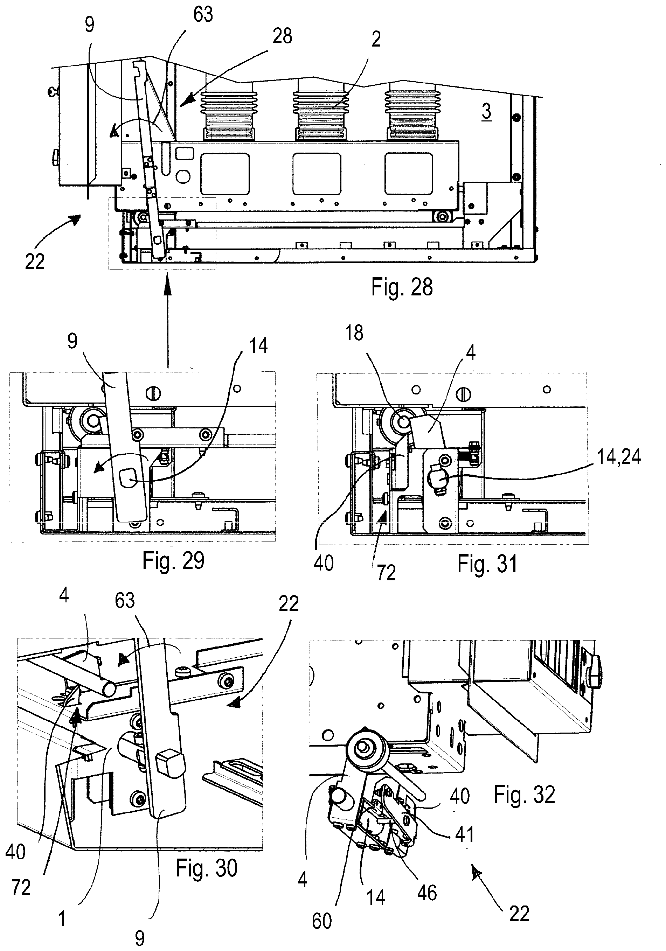

   Figures 28, 29, 30 show the insertion-extraction-mechanism with the driving-lever in a final position of the extraction-operative-configuration in which the circuit-breaker has been completely disengaged from the stationary contacts;
   Figure 31 is a view corresponding to Figure 29 but not showing the driving-lever;
   Figure 32 shows the pushing-protrusions and the blocking-protrusion of the insertion-extraction-mechanism in the final position of the extraction-operative-configuration, where it can be see the blocking-protrusion completely disengaged from a front wheel-axle of the circuit-breaker-trolley.

With reference to the attached Figures, an insertion-extraction mechanism 1 is shown, which is particularly suitable to be used in the Medium Voltage field, where, for the purposes of the present application, the term medium voltage refers to applications in the range from 1kV up to some tens of kV, e.g. 24 or 36 kV. The insertion-extraction mechanism 1 is suitable for being mounted in a switchgear 3 including a switching device 2, and is usable for noticeably facilitating the insertion/extraction of such a switching-device 2 in/from the switchgear 3. The switching device 2 in particular comprises a circuit breaker 2 which can be extracted from a compartment 15 of the switchgear 3 for enabling maintenance and/or installation interventions. Particularly, reference is made to a circuit breaker 2 - for the secondary-power-distribution - of the type which is supported by a trolley 38 that can move from an extraction position with respect to a switchgear 3, in which movable contacts 7 provided on the circuit-breaker 2 are disengaged from stationary contacts 8 of the switchgear 3, to an insertion position within the switchgear 3, in which the movable contacts 7 engage with the stationary contact 8.

A considerable advantage, as better resulting from the following description, is derivable from using said insertion-extraction-mechanism 1 in connection with a switchgear 3 in which the movable contacts 7 and the stationary contacts 8 reciprocally engage/disengage through quick-type-clamping-connections, such as a pliers-connection. This type of connection opposes an elastic-clamping-resistance during a reciprocal engagement/disengagement of the stationary 8 and movable 7 contacts and the insertion-extraction-mechanism 1 enables an operator to easily overcome such an elastic-clamping-resistance.

The insertion-extraction-mechanism 1 comprises displacing-means 4, 14 configured for exerting on the circuit breaker 2 a force 5 so as to move in a first direction 6 the movable contacts 7 relative to the stationary contacts 8. The insertion-extraction-mechanism 1 also comprises a driving-lever 9 configured for operating the above-mentioned displacing-means 4, 14 owing to an external-driving-force 12 which can be imparted by an operator. The displacing-means 4, 14 are configured for shifting the circuit-breaker 2 in an extraction direction 6, and for exerting on the circuit-breaker 2 such an extraction-force 5 as to disengage the movable contacts 7 from the respective stationary contacts 8.

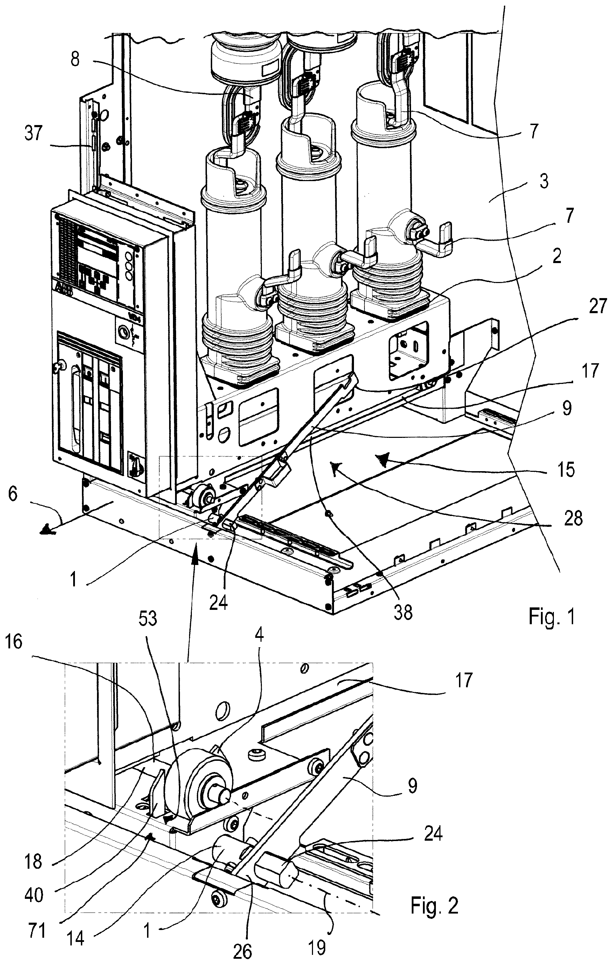

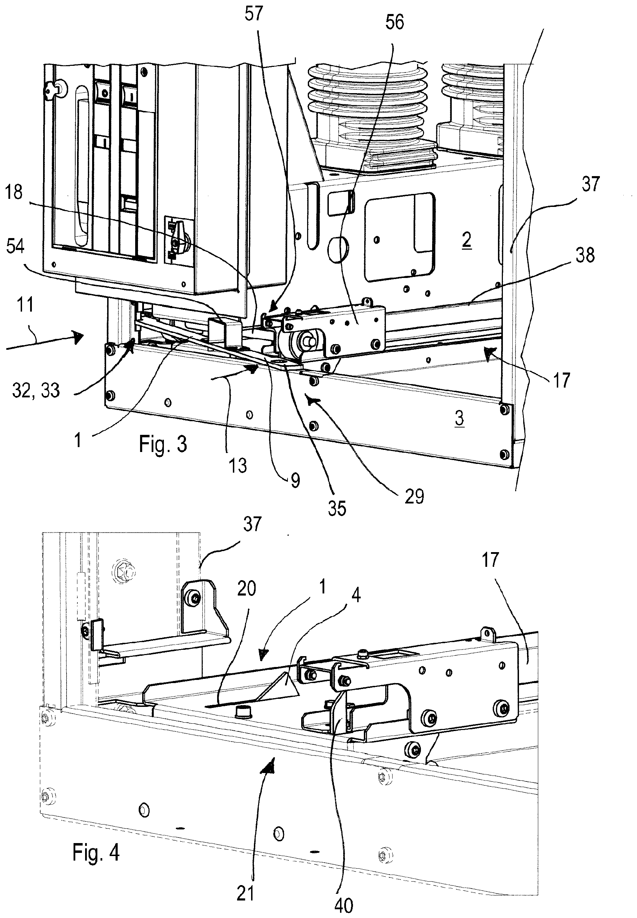

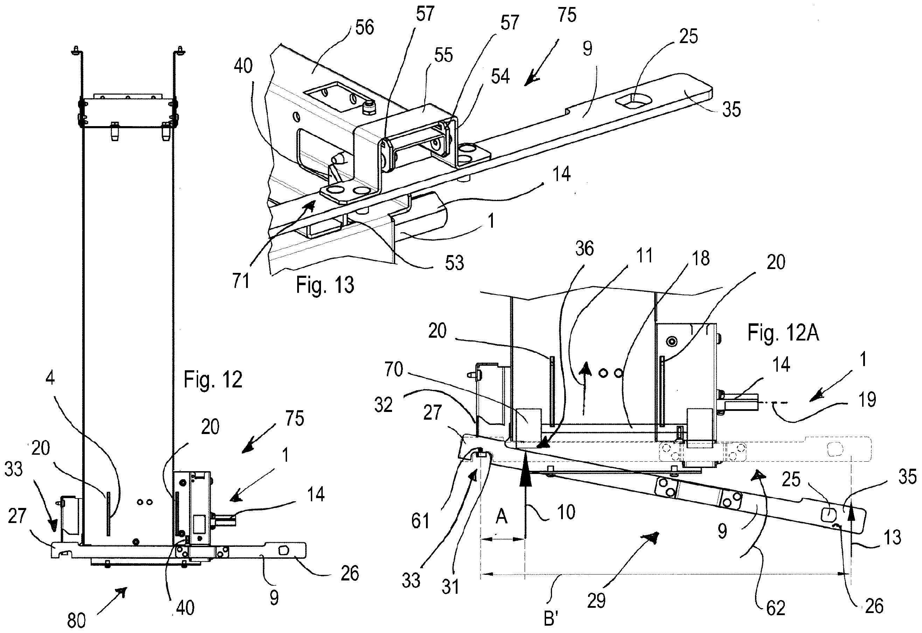

The driving-lever 9 is also configured for exerting on the circuit-breaker 2, upon an external-motion-force 13 which can be imparted by the operator, a respective force 10 so as to move the movable contacts 7 relative to the stationary contacts 8 in an insertion-direction 11. The driving-lever 9 is thus adapted for being used for two different operative purposes, i.e. for the extraction and the insertion respectively of the circuit-breaker 2 from/in the switchgear 3. More precisely, according to a first-use-configuration 28, as shown in Figures 1, 2, and 20-32, the driving-lever 9 engages with a portion 24 of the insertion-extraction-mechanism 1, better described later on, and drives the displacing-means 4, 14 in order to extract the circuit-breaker 2 from the switchgear 3. According to a second-use-configuration 29, as shown in Figures 3 and 12A, the driving-lever 9 is adapted for engaging with a further portion 32, 33 included in the insertion-extraction-mechanism 1 and operates for shifting the circuit-breaker 2 in the insertion-direction 11 to the inside of the switchgear 3. More precisely, the further portion comprises a bracket-element 32, on which an engagement-slot-seat 33 is obtained, for releasably coupling with an end of the driving-lever 9. The bracket-element 32 is fixable to a support-structure 65 of the insertion-extraction-mechanism 1 and to a frame 37 of the switchgear 3 so as to result near a fore lateral portion of the circuit-breaker 2. In particular, the bracket-element 32 is fitted on the frame 37 in a position such that the engagement-slot-seat 33 substantially faces, at a relatively small distance, a wheel 70 of the circuit-breaker 2.

The engagement-slot-seat 33 is obtained on a substantially vertical plate-wall 39 of the bracket-element 32.

As better described later on, the driving-lever 9 is configured for generating, upon the above-mentioned external-motion-force 13, a much greater insertion-force 10 on the circuit-breaker 2, which noticeably reduces the physical effort required to an operator for achieving the connection of the movable contacts 7 with the stationary contacts 8.

The displacing means comprise one or more extracting-protrusions 4 movable by the driving-lever 9 for pulling the circuit-breaker 2, upon the external-driving-force 12, to disengage the movable contacts 7 from the stationary contacts 8. The displacing means also comprise a transmission-shaft 14 which is rotatable along a rotation axis 19 by the driving-lever 9 and on which the extracting-protrusion/s 4 is/are provided. In the exemplary and not limitative embodiment here described and shown in the attached figures, there are provided two extracting protrusions 4 fixedly connected to the transmission-shaft 14. The two extracting protrusions 4, which may be shaped as pushing-plate-protrusions 4 spaced apart from one-other, project transversely from the transmission-shaft 14.

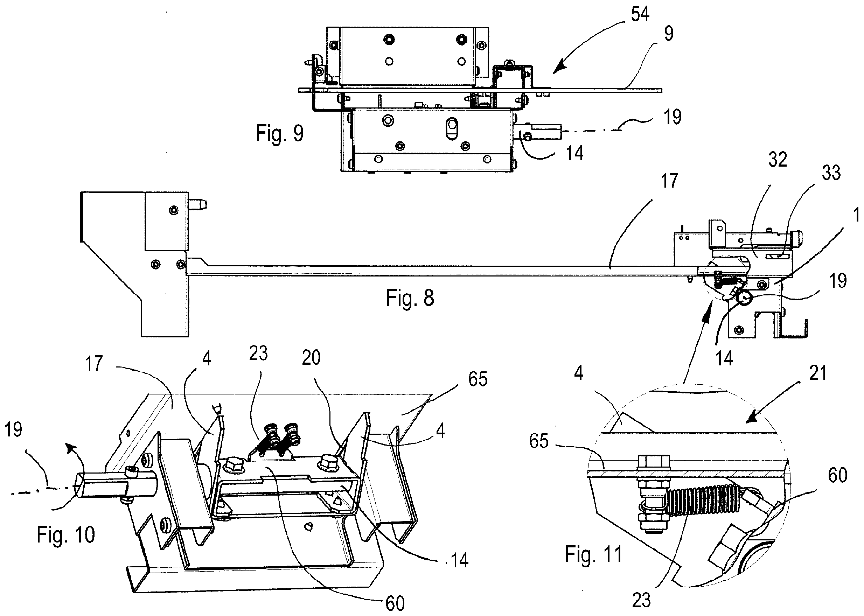

The transmission-shaft 14 is configured for rotating, upon the external-driving-force 12, from a rest-position 21, better shown in Figures 4, 5, 6, 8, 11, in which the extracting protrusions 4 are separated from the circuit-breaker 2, to a working-position 22, better shown in Figures 20 to 32, in which the extracting protrusions 4 go into contact with, and displace the circuit-breaker 2 along the extraction-direction 6.

The extracting protrusions 4 and the transmission-shaft 14 are adapted for being arranged in the proximity of a front zone of the compartment 15 which houses the circuit-breaker 2, and the extracting protrusions 4 are configured for acting on a fore part 16 of the circuit-breaker 2. In particular, the transmission-shaft 14 is arranged below a support-plane 17 on which the circuit-breaker 2 slideably rests. the support-plane 17, in particular, is part of the support-structure 65 of the insertion-extraction mechanism 1, which is configured to be fitted within the switchgear 3 and connected to the frame 37 of the latter through suitable fixing means.

The transmission-shaft 14 is positioned so that the extracting-protrusions 4, in the working-position 22 (better shown in Figures 20 to 32), go into contact with, and push a front wheels-axle 18 of the trolley 38 supporting the circuit-breaker 2, in the extraction-direction 6. The rotation axis 19 of the transmission-shaft 14 extends substantially horizontally and in such a way to result parallel to the front trolley-wheels-axle 18 of the circuit-breaker 2. The transmission-shaft 14 is rotatable around the rotation axis 19 from the rest-position 21, in which the extracting-protrusions 4 are at least partially retracted below the support-plane 17, to the working-position 22, in which the extracting-protrusions 4 project upward trough said support-plane 17 so as to reach the trolley-wheels-axle 18 to be pushed in the said extraction-direction 6 in order to pull the circuit-breaker 2 out of the switchgear 3. In particular, passage-slots 20 are obtained on the support-plane 17 through which the respective extracting-protrusions 4 may emerge upward and draw back downward.

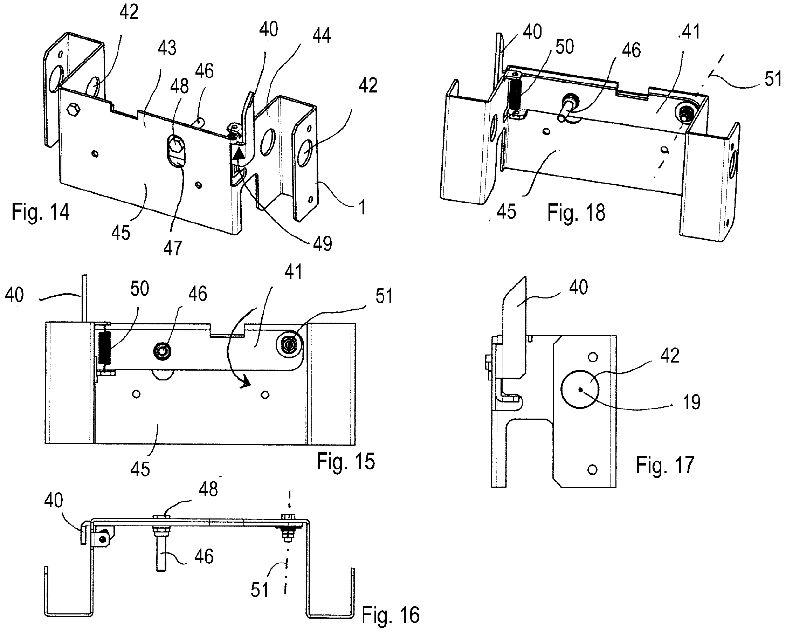

The transmission-shaft 14, holding the extracting-protrusions 4, is pivotally housed in seat-holes 42 provided on an hold-plate-element 45 (shown in detail in Figures 14 to 18). The hold-plate-element 45 is intended to be connected to the support-structure 65 of the insertion-extraction mechanism 1 and to be fixed to the frame 37 of the switchgear 3 for example by suitable screw-means. The hold-plate-element 45 comprises a front-plate-portion 43, intended to be arranged transversely with respect to the insertion 11 and extraction 6 directions, and side-plate-portions 44, which extend transversely to the front-plate-portion 43 and on which there are obtained the seat-holes 42.

The displacing means 4, 14, include elastic-means 23, such as one or more springs 23, which connect a base-portion 60 of extracting-protrusions 4 to the support-structure 65 of the insertion-extraction mechanism 1. The elastic-means 23 are arranged for urging the transmission-shaft 14 and the extracting-protrusions 4 to the above-described rest-position 21.

The transmission-shaft 14 comprises a tang-end 24 shaped for engaging with a coupling-opening 25 provided near a first end-zone 26 of the driving-lever 9. Reciprocal engagement of the coupling-opening 25 with the tang-end 24 enables movement of the driving-lever 9 to be transmitted to, and transformed into rotation of, the transmission-shaft 14. The driving-lever 9 has a second end-zone 27, opposite the first-end zone 26 and shaped for acting as a handle 27 to be grasped by an operator for imparting the external-driving-force 12 for extracting the circuit-breaker 2.

With particular reference to figures 20, 21, and 23, the coupling-opening 25 is separated from the second end-zone 27, by an arm-distance D1 which is greater than a further arm-distance D2 of the rotation axis 19 from a contact-zone 30 in which the extracting-protrusions 4 touch and push the wheels-axle 18 of the circuit-breaker 2. Owing to the structural configuration of the insertion-extraction mechanism 1 which makes possible such a reciprocal spatial arrangement of the forces involved, a remarkable mechanical advantage is achieved. In other words, in the first use-configuration 28, the driving-lever 9 and the displacing-means 4, 14 (transmission-shaft 14 and extracting-protrusions 4) cooperate and act as a force-multiplying-group: the external-driving-force 12 applied on the driving-lever 9 turns into an extraction-force 5 acting on the wheel-axle 18 which is much greater than the external-driving-force 12, thus noticeably facilitating, to an operator, disengagement of the movable contacts 7 from the stationary contacts 8 during extraction of the circuit-breaker 2.

In term equivalents, owing to the above described geometrical configuration of the driving-lever 9, and of the displacing-means 4, 14, the extraction-force 5 acting on the wheels-axle 18 is considerably magnified with respect to the external-driving-force 12 exerted on the second end-zone 27 of the driving-lever 9. Therefore, a small value of the external-driving-force 12 is sufficient for displacing the circuit-breaker 2 and overcoming the elastic-clamping-resistance of the contacts 7, 8.

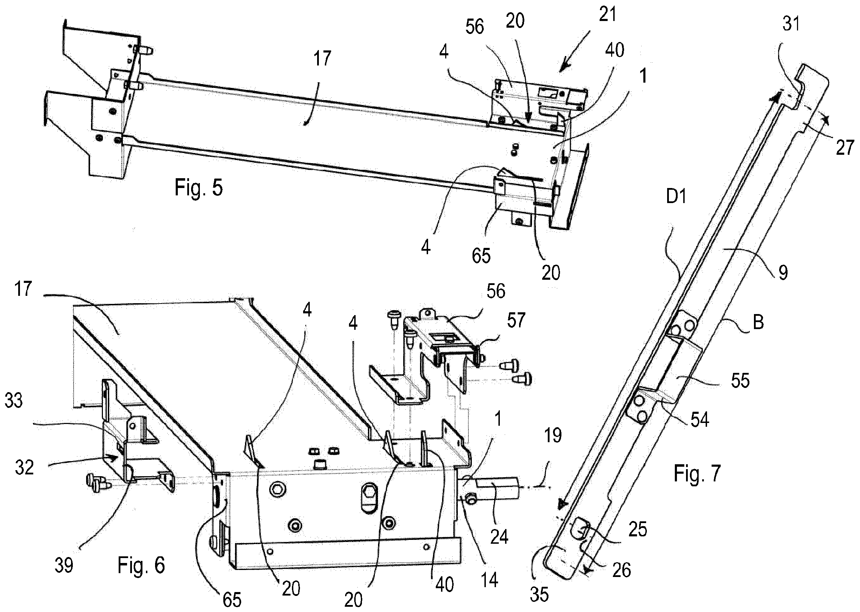

The driving-lever 9, shown in detail in Figures 7, 12, 12A, 13, may have a rectangular cross-section. The driving-lever 9 includes at an end an engagement-notch 31 shaped for releasably engaging with the engagement-slot-seat 33 of the of the bracket-element 32. When the engagement-notch 31 is received in the engagement-slot-seat 33, a fulcrum-contact-zone 61 is defined about which the driving-lever 9 is pivotable, as indicated by the arrow 62 in Figure 12A, under the external-motion-force 13 for pushing the circuit-breaker 2 into the compartment 15. In particular, the driving-lever 9 is adapted for going into contact with, and pushing the wheel 70 of the circuit-breaker 2 in a contact-zone 36, as shown in Figure 12A.

The driving-lever 9 comprises, at an opposite end with respect to said the engagement-notch 31, at a distance B therefrom, a handle-portion 35 which can be grasped by an operator for imparting the external-motion-force 13 in the insertion-direction 11. In this second-use-configuration 29, the external-motion-force 13 acting on the handle-portion 35 is at an arm-distance B' from the fulcrum-contact-zone 61 which is much greater than a further arm-distance A of the fulcrum-contact-zone 61 from the contact-zone 36 of the driving-lever 9 with the wheel 70. Owing to this configuration, the insertion-force 10 acting on the wheel 70 is magnified with respect to the external-motion-force 13 exerted on the handle-portion 35.

In other words, the driving-lever 9 engaged with the engagement-slot-seat 33 defines a leverage system, in particular acts as a second class lever, which amplifies a small input force (i.e. the external-motion force 13) for providing a greater output force (i.e. the insertion-force 10).

Owing to the structural configuration of the driving-lever 9 and to the accurately chosen position of the engagement-slot-seat 33 relative to the wheel 70 of the circuit-breaker 2, a lever-mechanical advantage is obtained during insertion of the circuit-breaker 2 in the compartment 15, which noticeably lightens the operator's effort. A very small value of the external-motion-force 13 is sufficient for inserting the circuit-breaker 2 in the compartment 15 and for overcoming the elastic-clamping-resistance opposed by the contacts 7, 8 during reciprocal engaging operation.

The insertion-extraction-mechanism 1 further comprises blocking-protrusion-means 40 (shown in detail in figures 14 to 18), movable by the displacing means 4, 14 from a blocking-position 71, in which the blocking-protrusion-means 40 block movement of the circuit-breaker 2 for preventing extraction thereof from the switchgear 3, and a releasing-position 72 in which the blocking-protrusion-means 40 are retracted in a spaced apart position from the circuit-breaker 2 for enabling extraction of the latter from the switchgear 3. The blocking-protrusion-means comprises a blocking-protrusion 40 obtained on a rocking-arm-element 41 which is hinged to the hold-plate-element 45 so as to be able to pivot about a substantially horizontal hinge-axis 51 from the blocking-position 71 to the releasing-position 72. The blocking-protrusion 40 may emerge above the support-plane 17 through an opening 53.

The rocking-arm-element 41 is elastically connected to a side plate-portion 44 of the hold-plate-element 45 by elastic means, such as a spring 50. The spring 50 acts for urging the rocking-arm-element 41, and therefore the blocking protrusion 40, in the blocking-position 71. In particular, in the blocking-position 71, the rocking-arm-element 41 is urged by the spring 50 against a stop-seat 49 provided in the hold-plate-element 45. The rocking-arm-element 41 is provided with a follower-pin 46, adapted for being displaced by the displacing-means 4, 14 to the releasing-position 72 when the displacing-means 4, 14 rotate for extracting the circuit-breaker 2 from the switchgear 3. In particular, the follower-pin 46 is displaceable downward by the base-portion 60 of the extracting-protrusions 4, as better visible in Figures 27 and 32. The follower-pin 46 is connected to the rocking-arm-element 41 by a screw 48. The screw 48 can run in a slot 47, of the hold-plate element 45, which define a stroke of the follower-pin 46.

The above described blocking-protrusion 40 acts for preventing any accidental or undesired extraction of the circuit-breaker 2 from the compartment 15, thus increasing the overall safety conditions for an operator. The blocking action of the blocking-protrusion 40 can be removed by driving the displacing means 4, 14 through the driving-lever 9. Furthermore, in case of necessity and if the transmission-shaft 14 cannot be driven, the blocking-protrusion 40 may also be moved in the releasing-position 72 by acting on, and lowering the screw 48, which is accessible from the outside through the slot 47.

As better shown in Figure 13, the driving-lever 9 comprises a locking-portion 54 shaped for coupling with one or more hooking-protrusions 57 provided on a stationary part 56 of the insertion-extraction-mechanism 1. The hooking-protrusions 57 are oriented to the inside of the compartment 15, and receive a slab-zone 55 of the locking-portion 54 so as to firmly secure the driving-lever 9 in a locking position 80. In the locking position 80 the driving-lever 9 engages with the engagement-slot-seat 33 and with the hooking-protrusions 57. In this position the driving-lever 9 is transversely arranged to the extraction-direction 6 and obstructs passage to the circuit-breaker 2 thus preventing undesired extraction of the latter from the switchgear 3. Therefore, the driving-lever 9, in addition to the first-use-configuration 28 and to the second-use-configuration 29 previously described, is also usable according to a third-use-configuration (shown Figures 12, 13, 19) in which acts as a further locking or blocking unit, thus furthermore increasing the overall safety conditions. Functioning of the insertion-extraction mechanism 1 is described in the following, starting from a configuration in which the circuit-breaker 2 is in an operative position inside the switchgear 3, i.e. with the movable contacts 7 engaged with the stationary contacts 8.

In such an initial configuration, shown in 19, the driving-lever 9 is arranged in the locking position 80. When an extraction of the circuit-breaker 2 from the switchgear 3 is required, the driving-lever 9, once removed from the hooking protrusions 57 and from the engagement-slot-seat 33, is coupled to the tang-end 24 of the transmission-shaft 14, as shown in Figure 20. The driving-lever 9 is rotated as indicated by the arrow 63 by application of the external-driving-force 12, thus driving the extracting-protrusions 4 upwards, and simultaneously driving the blocking-protrusion 40 downwards for enabling a free passage to the trolley 30. The extracting-protrusions 4 progressively push the wheel-axle 18 in the extraction direction 6.

When the circuit-breaker 2 is to be inserted again in the operative position, the driving-lever 9 is coupled to the engagement-slot-seat 33 and is moved as indicated by the arrow 62 in figure 12A, by application of the external-motion-force 13. The insertion-force 10 exerted by the driving-lever 9 on the wheel 70 force the circuit-breaker 2 to shift inside the compartment 15, and the reciprocal coupling of the stationary 8 and movable 7 contacts is easily achieved. The driving-lever 9 may be put back in the locking position 80 of Figure 19.

The insertion-extraction mechanism 1 above discussed therefore fully achieves the intended aim of providing a structurally simple technical solution which makes a switchgear highly reliable and safer and which makes the circuit-breaker-insertion/extraction procedures easier to an operator.

The insertion-extraction mechanism 1 is susceptible of modifications or variations all within the scope of the inventive concept as defined by the appended claims; any details may be replaced with technically equivalent elements.

One or more of the elements above described may be differently shaped and/or positioned, can be realized in one or more pieces and/or can be differently coupled or positioned, etcetera.

The materials, so long as they are compatible with the specific use, as well as the individual components, may be any according to the requirements and the state of the art.

## Claims

1. Insertion-extraction-mechanism for inserting/extracting a switching-device (2) in/from a switchgear (3), comprising:
- displacing-means (4, 14) configured to be arranged within the switchgear (3) and configured for exerting on said switching-device (2) a force (5) so as to move in a first direction (6) movable contacts (7) of said switching-device (2) with respect to stationary contacts (8) of said switchgear (3),
- hand operated driving-lever-means (9) configured for operating, through an external-driving-force (12), said displacing-means (4, 14),
- said driving-lever-means (9) being further configured for exerting on said switching-device (2), upon an external-motion-force (13), a respective force (10) so as to move in a second direction (11), opposite said first direction (6), said movable contacts (7) with respect to said stationary contacts (8), said driving-lever-means (9) being adapted for operating according to a first-use-configuration (28) in which they engage with a portion (24) of said insertion-extraction-mechanism (1) and drive said displacing-means (4, 14) for extracting said switching-device (2) from the switchgear (3),
**characterised in that** said driving-lever-means (9) are furthermore adapted for a second-use-configuration (29), in which they engage with a further portion (32, 33) of said insertion-extraction-mechanism (1) and operate for inserting said switching-device (2) into said switchgear (3) acting as a second class lever.

2. Insertion-extraction-mechanism according to claim 1, wherein said displacing-means (4, 14) are configured for shifting said switching-device (2) in an extraction direction (6) and for exerting thereon such an extraction-force (5) as to disengage said movable contacts (7) from the respective stationary contacts (8).

3. Insertion-extraction-mechanism according to claim 1 or 2, wherein said displacing-means (4, 14) and said driving-lever-means (9) mutually define a force-multiplying-group which is configured in such a way that upon said external-driving-force (12) an extraction-force (5) is applied on said switching device (2), said extraction-force (5) having a greater value with respect to said external-driving-force (12), so as to facilitate, to an operator, disengagement of said movable contacts (7) from said stationary contacts (8).

4. Insertion-extraction-mechanism according to any preceding claims, wherein said driving-lever-means (9) are configured for shifting said switching-device (2) in an insertion-direction (11), said driving-lever-means (9) being configured for generating, upon said external-motion-force (13), an insertion-force (10) having a greater value with respect to said external-motion-force (13), so as to facilitate, to an operator, coupling of said movable contacts (7) with said stationary contacts (8).

5. Insertion-extraction-mechanism according to any preceding claims, wherein said displacing means comprise extracting-protrusion-means (4) movable by said driving-lever-means (9) and configured for pulling said switching-device (2), upon said external-driving-force (12), to disengage said movable contacts (7) from said stationary contacts (8).

6. Insertion-extraction-mechanism according to any preceding claims, wherein said displacing means comprise a transmission-shaft (14) which is rotatable, along a rotation axis (19), by said driving-lever-means (9) and on which said extracting-protrusion-means (4) are provided, said rotatable transmission-shaft (14) being configured for rotating, upon said external-driving-force (12), from a rest-position (21), in which said extracting-protrusion-means (4) are separated from said switching-device (2), to a working-position (22) in which said extracting-protrusion-means (4) go into contact and displace said switching-device (2) along the extraction-direction (6).

7. Insertion-extraction-mechanism according to claim 6, wherein said extracting-protrusion-means (4) and said transmission-shaft (14) are adapted for being arranged in the proximity of a front zone of a compartment (15) which houses said switching-device (2), said extracting-protrusion-means (4) being configured for acting on a fore part (16) of said switching-device (2), further comprising elastic-means (23) for urging said extracting-protrusion-means (4) and said transmission-shaft (14) to said rest-position (21).

8. Insertion-extraction-mechanism according to claims 6 or 7, wherein said transmission-shaft (14) is arranged below a support-plane (17) on which said switching-device (2) slideably rests, and in which said extracting-protrusion-means comprise pushing-plate-protrusions (4), fixedly connected to, and transversely projecting from, said transmission-shaft (14).

9. Insertion-extraction-mechanism according to any one of claims 6 to 8, wherein said transmission-shaft (14) is positioned so that said extracting-protrusion-means (4), in said working-position (22), go into contact with, and push a trolley-wheels-axle (18) of said switching-device (2) in said extraction-direction (6).

10. Insertion-extraction-mechanism according to claim 8 or 9, wherein said rotation axis (19) of said transmission-shaft (14) extends substantially horizontally and parallel to a front trolley-wheels-axle (18) of said switching-device (2), said transmission-shaft (14) being rotatable around said rotation axis (19) from said rest-position (21), in which said extracting-protrusion-means (4) are at least partially retracted below said support-plane (17), to said working-position (22) in which said extracting-protrusion-means (4) project upward from said support-plane (17) through respective passage-slots (20) for pushing said front trolley-wheels-axle (18) in said extraction-direction (6) so as to pull said switching-device (2) out of the switchgear (3).

11. Insertion-extraction-mechanism according to claim 9 or 10, wherein said transmission-shaft (14) comprises a tang-end (24) shaped for engaging with a coupling-opening (25) provided near a first end-zone (26) of said driving-lever-means (9), for enabling movement of said driving-lever-means (9) to be transmitted to, and transformed into rotation of, said transmission-shaft (14), said driving-lever-means (9) having a second end-zone (27), opposite said first-end zone (26) and shaped for acting as a handle (27) to be grasped by an operator for imparting said external-driving-force (12), wherein, an arm-distance (D1) of said second end-zone (27) from said coupling-opening (25) is greater than a further arm-distance (D2) of said rotation axis (19) from a contact-zone (30) in which said extracting-protrusion-means (4) touch and push said wheels-axle (18), so that said extraction-force (5) acting on said wheels-axle (18) is magnified with respect to said external-driving-force (12) exerted on said second end-zone (27).

12. Insertion-extraction-mechanism according to any one of claims 9 to 11, comprising a stationary bracket-element (32) on which there is obtained an engagement-slot-seat (33), said driving-lever-means (9) including at an end an engagement-notch (31) shaped for releasably engaging with said engagement-slot-seat (33) so as to define a fulcrum-contact-zone (61) about which said driving-lever-means (9) are pivotable upon said external-motion-force (13) for pushing said switching-device (2) into said switchgear (3), said driving-lever-means (9) comprising, at an opposite end with respect to said engagement-notch (31), a handle-portion (35) suitable to be grasped by an operator for imparting said external-motion-force (13) in said insertion-direction (11), wherein a respective arm-distance (B') of said external-motion-force (13) applied on said handle-portion (35) from said fulcrum-contact-zone (61) is greater than a further arm-distance (A) of said fulcrum-contact-zone (61) from a respective contact-zone (36) in which said driving-lever-means (9) touch and push a wheel (70) of the switching-device (2), so that said insertion-force (10) acting on said wheel (70) is magnified with respect to said external-motion-force (13) exerted on said handle-portion (35).

13. Insertion-extraction-mechanism according to any one of preceding claims, further comprising blocking-protrusion-means (40), movable by said displacing means (4, 14) from a blocking-position (71), in which said blocking-protrusion-means (40) project for blocking movement of said switching device (2) thus preventing extraction of the latter from the switchgear (3), and a releasing-position (72) in which said blocking-protrusion-means (40) are retracted away from said switching device (2) for enabling extraction of the latter from the switchgear (3).

14. Insertion-extraction-mechanism according to claim 13, wherein said blocking-protrusion-means (40) are obtained on a rocking-arm-element (41) which is hinged to a hold-plate-element (45) for pivoting about a hinge-axis (51) from said blocking-position (71) to said releasing-position (72), said rocking-arm-element (41) being urged to said blocking-position (71) through spring means (50) and comprising a follower-pin (46) adapted for being displaced by said displacing-means (4, 14) to said releasing-position (72) upon a movement of said displacing-means (4, 14) for the extraction of said switching device (2) from the switchgear (3).

15. Insertion-extraction-mechanism according to any one of preceding claims, wherein said driving-lever-means (9) comprise a locking-portion (54) shaped for coupling with one or more hooking-protrusions (57) provided on a stationary part (56) of said insertion-extraction-mechanism (1) for blocking said driving-lever-means (9) in a locking-position (80), wherein said driving-lever-means (9) are adapted for being arranged transversely to said first direction (6) for obstructing passage to said switching-device (2) thus preventing extraction of said switching-device (2) from the switchgear (3).

16. Switchgear apparatus comprising a switching device (3) and an insertion-extraction-mechanism (1) according to any one of preceding claims.

## Patentansprüche

1. Einführ-Auszugs-Mechanismus zum Einführen/Entnehmen einer Schalteinrichtung (2) in/aus ein/einem Schaltgerät (3) mit:
- Verschiebemitteln (4, 14), die dazu ausgebildet sind, innerhalb des Schaltgeräts (3) angeordnet zu sein und das dazu ausgebildet ist, auf die Schalteinrichtung (2) eine Kraft (5) auszuüben, um so bewegliche Kontakte (7) der Schalteinrichtung (2) in Bezug auf stationäre Kontakte (8) des Schaltgeräts (3) in einer ersten Richtung (6) zu bewegen,
- handbetätigten Antriebshebelmitteln (9), die dazu ausgebildet sind, die Verschiebemittel (4, 14) über eine externe Antriebskraft (12) zu betätigen,
- wobei die Antriebshebelmittel (9) ferner dazu ausgebildet sind, auf die Schalteinrichtung (2) infolge einer äußeren Antriebskraft (13) eine entsprechende Kraft (10) auszuüben, um so die beweglichen Kontakte (7) in Bezug auf die stationären Kontakte (8) in eine zweite Richtung (11) gegenüber der ersten Richtung (6) zu bewegen,
wobei die Antriebshebelmittel (9) dazu ausgebildet sind, gemäß einer ersten Benutzungskonfiguration (28) zu arbeiten, in der sie an einem Bereich (24) des Einführ-Auszugs-Mechanismus (1) angreifen und die Verschiebemittel (4, 14) antreiben, um die Schalteinrichtung (2) aus dem Schaltgerät (3) auszuziehen, **dadurch gekennzeichnet, dass** die Antriebshebelmittel (9) ferner auf eine zweite Benutzerkonfiguration (29) angepasst sind, in der sie an einem weiteren Bereich (32, 33) des Einführ-Auszugs-Mechanismus (1) angreifen und arbeiten, um die Schalteinrichtung (2) in das Schaltgerät (3) einzuführen und als ein Hebel zweiter Klasse zu wirken.

2. Einführ-Auszugs-Mechanismus nach Anspruch 1, bei dem die Verschiebemittel (4, 14) dazu ausgebildet sind, die Schalteinrichtung (2) in einer Auszugsrichtung (6) zu verschieben, und um darauf eine Auszugskraft (5) auszuüben, um die beweglichen Kontakte (7) von den betreffenden stationären Kontakten (8) zu lösen.

3. Einführ-Auszugs-Mechanismus nach Anspruch 1 oder 2, bei dem die Verschiebemittel (4, 14) und die Antriebshebelmittel (9) gemeinsam eine kraftvergrößernde Gruppe definieren, die auf eine solche Weise ausgebildet ist, dass bei Ausübung der externen Antriebskraft (12) eine Auszugskraft (5) auf die Schalteinrichtung (2) angewandt wird, die Auszugskraft (5) einen größeren Wert in Bezug auf die äußere Antriebskraft (12) hat, um so einem Bediener das Lösen der beweglichen Kontakte (5) von den stationären Kontakten (8) zu erleichtern.

4. Einführ-Auszugs-Mechanismus nach irgendeinem der vorhergehenden Ansprüche, bei dem die Antriebshebelmittel (9) dazu ausgebildet sind, die Schalteinrichtung (2) in einer Einführrichtung (11) zu verschieben, wobei die Antriebshebelmittel (9) dazu ausgebildet sind, bei dem Ausüben der äußeren Antriebskraft (13) eine Einführkraft (10) zu erzeugen, die einen größeren Wert in Bezug auf die äußere Bewegungskraft (13) hat, um es so einem Bediener zu erleichtern, die beweglichen Kontakte (7) mit den stationären Kontakten (8) zu koppeln.

5. Einführ-Auszugs-Mechanismus nach irgendeinem der vorhergehenden Ansprüche, bei dem die Verschiebemittel Auszugs-Vorsprungsmittel (4) aufweisen, die von den Antriebshebelmitteln (9) beweglich sind und dazu ausgebildet sind, die Schalteinrichtung (2) bei Ausübung der externen Antriebskraft (12) zu ziehen, um die beweglichen Kontakte (7) von den stationären Kontakten (8) zu lösen.

6. Einführ-Auszugs-Mechanismus nach irgendeinem der vorhergehenden Ansprüche, bei dem die Verschiebemittel eine Übertragungswelle (14) aufweisen, die entlang einer Drehachse (19) mit Hilfe der Antriebshebelmittel (9) drehbar ist, und an der die Auszugs-Vorsprungsmittel (4) vorgesehen sind, wobei die drehbare Übertragungswelle (14) dazu ausgebildet ist, sich bei Ausübung der externen Antriebskraft (12) aus einer Ruheposition (21), in der die Auszugs-Vorsprungsmittel (4) von der Schalteinrichtung (2) getrennt sind, in eine Arbeitsposition (22) zu drehen, in der die Auszugs-Vorsprungsmittel (4) in Kontakt gelangen und die Schalteinrichtung (2) entlang der Auszugsrichtung (6) verschieben.

7. Einführ-Auszugs-Mechanismus nach Anspruch 6, bei der das Einführ-Vorsprungsmittel (4) und die Übertragungswelle (14) dazu ausgebildet sind, in der Nähe einer vorderen Zone eines Bereiches (15) angeordnet zu werden, der die Schalteinrichtung (2) aufnimmt, wobei die Auszugs-Vorsprungsmittel (4) dazu ausgebildet sind, auf einem Vorderteil (16) der Schalteinrichtung (2) zu wirken, wobei ferner ein elastisches Mittel (23) vorgesehen ist, um die Auszugs-Vorsprungsmittel (4) und die Übertragungswelle (14) in die Ruheposition (21) vorzuspannen.

8. Einführ-Auszugs-Mechanismus nach Anspruch 6 oder 7, bei dem die Übertragungswelle (14) unterhalb einer Aufnahmeebene (17) angeordnet ist, an der die Schalteinrichtung (2) verschiebbar gehalten ist, und wobei die Auszugs-Vorsprungsmittel Druckplattenvorsprünge (4) aufweisen, die an der Übertragungswelle (14) fest aufgenommen sind und quer davon hervorstehen.

9. Einführ-Auszugs-Mechanismus nach irgendeinem der Ansprüche 6 bis 8, bei dem die Übertragungswelle (14) derart positioniert ist, dass die Auszugs-Vorsprungsmittel (4) in der Arbeitsposition (22) in Kontakt mit einer Laufwagenachse (18) der Schalteinrichtung (2) gelangen und diese in die Auszugsrichtung (6) drücken.

10. Einführ-Auszugs-Mechanismus nach Anspruch 8 oder 9, bei dem die Drehachse (19) der Übertragungswelle (14) sich im Wesentlichen horizontal und parallel zu einer vorderen Laufwagenachse (18) der Schalteinrichtung (2) erstreckt, wobei die Übertragungswelle (14) um die Drehachse (19) aus der Ruheposition (21) drehbar ist, in der die Auszugs-Vorsprungsmittel (4) wenigstens teilweise unterhalb der Aufnahmeebene (17) eingezogen sind, in die Arbeitsposition (22), in der die Auszugs-Vorsprungsmittel (4) von der Aufnahmeebene (17) durch zugeordnete Durchgangsschlitze (20) nach oben hervorstehen, um die vordere Laufwagenachse (18) in die Auszugsrichtung (6) zu drücken, um so die Schalteinrichtung (2) aus dem Schaltgerät (3) herauszuziehen.

11. Einführ-Auszugs-Mechanismus nach Anspruch 9 oder 10, bei dem die Übertragungswelle (14) ein Angel-Ende (24) aufweist, das dazu geformt ist, an einer Koppelöffnung (25) anzugreifen, die in der Nähe eines ersten Endbereiches (26) der Antriebshebelmittel (9) vorgesehen ist, um es zu ermöglichen, dass eine Bewegung der Antriebshebel (9) zu der Übertragungswelle (14) übertragen wird und in eine Drehung derselben umgesetzt wird, wobei die Antriebshebelmittel (9) eine zweite Endzone (27) aufweisen, gegenüber der ersten Endzone (26), die dazu geformt ist, als ein Griff (27) zu wirken, der von einem Bediener ergriffen werden kann, um die äußere Antriebskraft (12) auszuüben, wobei ein Armabstand (D1) der zweiten Endzone (27) von der Koppelöffnung (25) größer als ein weiterer Armabstand (D2) der Drehachse (19) von einer Kontaktzone (30) ist, in der die Auszieh-Vorsprungsmittel (4) die Radachse (18) berühren und andrücken, so dass die Auszugskraft (5), die auf die Radachse (18) wirkt, in Bezug auf die äußere Antriebskraft (12), die auf die zweite Endzone (27) ausgeübt wird, vergrößert wird.

12. Einführ-Auszugs-Mechanismus nach irgendeinem der Ansprüche 9 bis 11, mit einem stationären Trägerelement (32), an dem ein Eingriffsschlitz (33) vorgesehen ist, wobei die Antriebshebelmittel (9) an einem Ende ein Eingriffs-Kerbmittel (31) aufweisen, das dazu geformt ist, lösbar an dem Eingriffsschlitzsitz (33) anzugreifen, um so eine Drehpunkt-Kontaktzone (61) zu definieren, um die die Antriebshebelmittel (9) bei Ausübung der äußeren Bewegungskraft (13) verschwenkbar sind, um die Schalteinrichtung (2) in das Schaltgerät (3) zu drücken, wobei die Antriebshebelmittel (9) an einem in Bezug auf die Eingriffskerbe (31) gegenüberliegenden Ende einen Griffbereich (35) aufweisen, der von einem Bediener ergriffen werden kann, um die äußere Bewegungskraft (13) in Einführrichtung (11) auszuüben, wobei ein entsprechender Armabstand (B') der äußeren Antriebskraft (13), die auf den Griffabschnitt (35) von der Drehpunkt-Kontaktzone (31) ausgeübt wird, größer ist als ein weiterer Armabstand (A) von der Drehpunkt-Kontaktzone (61) von einer entsprechenden Kontaktzone (36), in der die Antriebshebelmittel (9) ein Rad (70) der Schalteinrichtung (2) berühren und andrücken, so dass die auf das Rad (70) wirkende Einführkraft (10) in Bezug auf die äußere Antriebskraft (13), die auf den Griffabschnitt (35) ausgeübt wird, vergrößert wird.

13. Einführ-Auszugs-Mechanismus nach irgendeinem der vorhergehenden Ansprüche, der ferner ein Blockier-Vorsprungsmittel (40) aufweist, das mittels des Verschiebemittels (4, 14) aus einer Blockierposition (71), in der das Blockier-Vorsprungsmittel (40) vorsteht, um eine Bewegung der Schalteinrichtung (2) zu blockieren, um so ein Ausziehen der letzteren aus dem Schaltgerät (3) zu verhindern, in eine Freigabeposition (32), in der die Blockier-Vorsprungsmittel (40) von der Schalteinrichtung (2) zurückgezogen sind, um ein Ausziehen der letzteren aus dem Schaltgerät (3) zu ermöglichen.

14. Einführ-Auszugs-Mechanismus nach Anspruch 13, bei dem die Blockier-Vorsprungsmittel (40) an einem Kipparmelement (41) vorgesehen sind, das an einem Halteplattenelement (45) angelenkt ist, um eine Gelenkachse (51) aus der Blockierposition (71) in die Freigabeposition (72) zu verschwenken, wobei das Kipparmelement (41) durch Federmittel (50) in die Blockierposition (71) gedrängt wird, und wobei ein Mitnahmestift (46) vorgesehen ist, der zur Verschiebung mittels der Verschiebemittel (4, 14) in die Freigabeposition (72) bei einer Bewegung der Verschiebemittel (4, 14) zum Ausziehen der Schalteinrichtung (2) aus dem Schaltgerät (3) ausgebildet ist.

15. Einführ-Auszugs-Mechanismus nach irgendeinem der vorhergehenden Ansprüche, bei dem die Antriebshebelmittel (9) einen Verriegelungsabschnitt (54) aufweisen, der zum Koppeln mit einem oder mehreren Hakenvorsprüngen (57) geformt ist, die an einem stationären Teil (56) des Einführ-Auszugs-Mechanismus (1) vorgesehen sind, um die Antriebshebelmittel (9) in einer Rastposition (80) zu blockieren, wobei die Antriebshebelmittel (9) dazu ausgebildet sind, quer zu der ersten Richtung (6) angeordnet zu sein, um eine Durchführung zu der Schalteinrichtung (2) um so ein Ausziehen der Schalteinrichtung (2) aus dem Schaltgerät (3) zu verhindern.

16. Schaltvorrichtung mit einem Schaltgerät (3) und einem Einführ-Auszugs-Mechanismus (1) nach irgendeinem der vorhergehenden Ansprüche.

## Revendications

1. Mécanisme d'insertion-extraction pour insérer/extraire un dispositif de commutation (2) dans/à partir d'un appareillage de commutation (3), comprenant:
- moyens de déplacement (4, 14) configurés pour être agencés à l'intérieur de l'appareillage de commutation (3) et configurés pour exercer sur ledit dispositif de commutation (2) une force (5) de façon à déplacer dans une première direction (6) des contacts mobiles (7) dudit dispositif de commutation (2) par rapport à des contacts fixes (8) dudit appareillage de commutation (3),
- un moyen formant levier d'entraînement manuel (9) configuré pour actionner, par le biais d'une force d'entraînement externe (12), lesdits moyens de déplacement (4, 14),
- ledit moyen formant levier d'entraînement (9) étant en outre configuré pour exercer sur ledit dispositif de commutation (2), en réponse à une force de déplacement externe (13), une force respective (10) de façon à déplacer dans une seconde direction (11), opposée à ladite première direction (6), lesdits contacts mobiles (7) par rapport auxdits contacts fixes (8),
ledit moyen formant levier d'entraînement (9) étant adapté pour l'actionnement selon une première configuration d'utilisation (28) dans laquelle il vient en prise avec une portion (24) dudit mécanisme d'insertion-extraction (1) et entraîne lesdits moyens de déplacement (4, 14) pour extraire ledit dispositif de commutation (2) de l'appareillage de commutation (3),
**caractérisé en ce que** ledit moyen formant levier d'entraînement (9) est par ailleurs adapté pour une seconde configuration d'utilisation (29), dans laquelle il vient en prise avec une autre portion (32, 33) dudit mécanisme d'insertion-extraction (1) et a pour action d'insérer ledit dispositif de commutation (2) dans ledit appareillage de commutation (3) agissant comme un levier de seconde classe.

2. Mécanisme d'insertion-extraction selon la revendication 1, dans lequel lesdits moyens de déplacement (4, 14) sont configurés pour décaler ledit dispositif de commutation (2) dans une direction d'extraction (6) et pour exercer sur celui-ci une force d'extraction (5) permettant de dégager lesdits contacts mobiles (7) des contacts fixes respectifs (8).

3. Mécanisme d'insertion-extraction selon la revendication 1 ou 2, dans lequel lesdits moyens de déplacement (4, 14) et ledit moyen formant levier d'entraînement (9) définissent mutuellement un groupe multipliant les forces qui est configuré de manière à ce qu'en réponse à ladite force d'entraînement externe (12) une force d'extraction (5) soit appliquée sur ledit dispositif de commutation (2), ladite force d'extraction (5) ayant une valeur supérieure par rapport à ladite force d'entraînement externe (12), de façon à faciliter, pour un opérateur, le dégagement desdits contacts mobiles (7) desdits contacts fixes (8).

4. Mécanisme d'insertion-extraction selon l'une quelconque des revendications précédentes, dans lequel ledit moyen formant levier d'entraînement (9) est configuré pour décaler ledit dispositif de commutation (2) dans une direction d'insertion (11), ledit moyen formant levier d'entraînement (9) étant configuré pour générer, en réponse à ladite force de déplacement externe (13), une force d'insertion (10) ayant une valeur supérieure par rapport à ladite force de déplacement externe (13), de façon à faciliter, pour un opérateur, l'accouplement desdits contacts mobiles (7) avec lesdits contacts fixes (8).

5. Mécanisme d'insertion-extraction selon l'une quelconque des revendications précédentes, dans lequel lesdits moyens de déplacement comprennent un moyen d'extraction en saillie (4) pouvant être déplacé par ledit moyen formant levier d'entraînement (9) et configuré pour tirer ledit dispositif de commutation (2), en réponse à ladite force d'entraînement externe (12), pour dégager lesdits contacts mobiles (7) desdits contacts fixes (8).

6. Mécanisme d'insertion-extraction selon l'une quelconque des revendications précédentes, dans lequel lesdits moyens de déplacement comprennent un arbre de transmission (14) qui peut être mis en rotation, le long d'un axe de rotation (19), par ledit moyen formant levier d'entraînement (9) et sur lequel ledit moyen d'extraction en saillie (4) est prévu, ledit arbre de transmission rotatif (14) étant configuré pour tourner, en réponse à ladite force d'entraînement externe (12), d'une position de repos (21), dans laquelle ledit moyen d'extraction en saillie (4) est séparé dudit dispositif de commutation (2), à une position active (22) dans laquelle ledit moyen d'extraction en saillie (4) vient en contact avec ledit dispositif de commutation (2) et le déplace le long de la direction d'extraction (6).

7. Mécanisme d'insertion-extraction selon la revendication 6, dans lequel ledit moyen d'extraction en saillie (4) et ledit arbre de transmission (14) sont adaptés pour être agencés à proximité d'une zone frontale d'un compartiment (15) qui abrite ledit dispositif de commutation (2), ledit moyen d'extraction en saillie (4) étant configuré pour agir sur une partie avant (16) dudit dispositif de commutation (2), comprenant en outre un moyen élastique (23) pour amener ledit moyen d'extraction en saillie (4) et ledit arbre de transmission (14) à ladite position de repos (21).

8. Mécanisme d'insertion-extraction selon les revendications 6 ou 7, dans lequel ledit arbre de transmission (14) est agencé sous un plan de support (17) sur lequel ledit dispositif de commutation (2) repose de manière coulissante, et dans lequel ledit moyen d'extraction en saillie comprend des saillies de plaque de poussée (4), raccordées de manière fixe audit arbre de transmission (14) et faisant saillie de manière transversale à partir de celui-ci.

9. Mécanisme d'insertion-extraction selon l'une quelconque des revendications 6 à 8, dans lequel ledit arbre de transmission (14) est positionné de sorte que ledit moyen d'extraction en saillie (4), dans ladite position active (22), vienne en contact avec, et pousse un essieu de roues de chariot (18) dudit dispositif de commutation (2) dans ladite direction d'extraction (6).

10. Mécanisme d'insertion-extraction selon la revendication 8 ou 9, dans lequel ledit axe de rotation (19) dudit arbre de transmission (14) s'étend sensiblement horizontalement et parallèlement à un essieu de roues de chariot avant (18) dudit dispositif de commutation (2), ledit arbre de transmission (14) pouvant tourner autour dudit axe de rotation (19) de ladite position de repos (21), dans laquelle ledit moyen d'extraction en saillie (4) est au moins partiellement rétracté sous ledit plan de support (17), à ladite position active (22) dans laquelle ledit moyen d'extraction en saillie (4) fait saillie vers le haut à partir dudit plan de support (17) à travers des fentes de passage respectives (20) pour pousser ledit essieu de roues de chariot avant (18) dans ladite direction d'extraction (6) de façon à retirer ledit dispositif de commutation (2) de l'appareillage de commutation (3).

11. Mécanisme d'insertion-extraction selon la revendication 9 ou 10, dans lequel ledit arbre de transmission (14) comprend une extrémité en queue (24) façonnée pour venir en prise avec une ouverture d'accouplement (25) prévue près d'une première zone d'extrémité (26) dudit moyen formant levier d'entraînement (9), pour permettre au mouvement dudit moyen formant levier d'entraînement (9) d'être transmis audit arbre de transmission (14) et transformé en rotation de celui-ci, ledit moyen formant levier d'entraînement (9) ayant une seconde zone d'extrémité (27), opposée à ladite première zone d'extrémité (26) et façonnée pour agir comme une poignée (27) devant être saisie par un opérateur pour conférer ladite force d'entraînement externe (12), dans lequel, une distance de bras (D1) de ladite seconde zone d'extrémité (27) à ladite ouverture d'accouplement (25) est supérieure à une autre distance de bras (D2) dudit axe de rotation (19) à une zone de contact (30) dans laquelle ledit moyen d'extraction en saillie (4) touche et pousse ledit essieu de roues (18), de sorte que ladite force d'extraction (5) agissant sur ledit essieu de roues (18) soit amplifiée par rapport à ladite force d'entraînement externe (12) exercée sur ladite seconde zone d'extrémité (27).

12. Mécanisme d'insertion-extraction selon l'une quelconque des revendications 9 à 11, comprenant un élément de support fixe (32) sur lequel est obtenu un siège de fente de mise en prise (33), ledit moyen formant levier d'entraînement (9) incluant à une extrémité une encoche de mise en prise (31) façonnée pour venir en prise de manière libérable avec ledit siège de fente de mise en prise (33) de façon à définir une zone de contact formant pivot (61) autour de laquelle ledit moyen formant levier d'entraînement (9) peut tourner en réponse à ladite force de déplacement externe (13) pour pousser ledit dispositif de commutation (2) dans ledit appareillage de commutation (3), ledit moyen formant levier d'entraînement (9) comprenant, à une extrémité opposée par rapport à ladite encoche de mise en prise (31), une portion formant poignée (35) adaptée pour être saisie par un opérateur pour conférer ladite force de déplacement externe (13) dans ladite direction d'insertion (11), dans lequel une distance de bras respective (B') de ladite force de déplacement externe (13) appliquée sur ladite portion formant poignée (35) à partir de ladite zone de contact formant pivot (61) est supérieure à une autre distance de bras (A) de ladite zone de contact formant pivot (61) à partir d'une zone de contact respective (36) dans laquelle ledit moyen formant levier d'entraînement (9) touche et pousse une roue (70) du dispositif de commutation (2), de sorte que ladite force d'insertion (10) agissant sur ladite roue (70) soit amplifiée par rapport à ladite force de déplacement externe (13) exercée sur ladite portion formant poignée (35).

13. Mécanisme d'insertion-extraction selon l'une quelconque des revendications précédentes, comprenant en outre un moyen de blocage en saillie (40), pouvant être déplacé par lesdits moyens de déplacement (4, 14) d'une position de blocage (71), dans laquelle ledit moyen de blocage en saillie (40) est en saillie pour bloquer le mouvement dudit dispositif de commutation (2) en prévenant ainsi l'extraction de ce dernier de l'appareillage de commutation (3), à une position de libération (72) dans laquelle ledit moyen de blocage en saillie (40) est rétracté à l'écart dudit dispositif de commutation (2) pour permettre l'extraction de ce dernier de l'appareillage de commutation (3).

14. Mécanisme d'insertion-extraction selon la revendication 13, dans lequel ledit moyen de blocage en saillie (40) est obtenu sur un élément formant bras pendulaire (41) qui est articulé sur un élément formant plaque de soutien (45) pour pivoter autour d'un axe d'articulation (51) de ladite position de blocage (71) à ladite position de libération (72), ledit élément de bras pendulaire (41) étant amené à ladite position de blocage (71) par le biais d'un moyen formant ressort (50) et comprenant une broche suiveuse (46) adaptée pour être déplacée par lesdits moyens de déplacement (4, 14) jusqu'à ladite position de libération (72) en réponse à un mouvement desdits moyens de déplacement (4, 14) pour l'extraction dudit dispositif de commutation (2) de l'appareillage de commutation (3).

15. Mécanisme d'insertion-extraction selon l'une quelconque des revendications précédentes, dans lequel ledit moyen formant levier d'entraînement (9) comprend une portion de verrouillage (54) façonnée pour venir en accouplement avec une ou plusieurs saillies d'accrochage (57) prévues sur une partie fixe (56) dudit mécanisme d'insertion-extraction (1) pour bloquer ledit moyen formant levier d'entraînement (9) dans une position de verrouillage (80), dans lequel ledit moyen formant levier d'entraînement (9) est adapté pour être agencé de manière transversale par rapport à ladite première direction (6) pour obstruer le passage audit dispositif de commutation (2) en prévenant ainsi l'extraction dudit dispositif de commutation (2) de l'appareillage de commutation (3).

16. Appareil de commutation comprenant un dispositif de commutation (3) et un mécanisme d'insertion-extraction (1) selon l'une quelconque des revendications précédentes.
